# EUROPEAN PATENT APPLICATION

(11) **EP 2 980 742 A1**
(43) Date of publication of application: **03.02.2016**
(21) Application number: 14772654.1
(22) Date of filing: 20.03.2014
(51) Int. Cl.: G06Q 20/32

(54) **ONLINE PAYMENT SYSTEM AND METHOD BASED ON TWO-DIMENSIONAL CODE**

(30) Priority: 25.03.2013 CN 201310096291
(71) Applicant: China Unionpay Co., Ltd, Shanghai 200135 (CN)
(72) Inventor: YANG, Yang, Shanghai 200135 (CN); HUA, Jinzhi, Shanghai 200135 (CN)
(74) Representative: Berkenbrink, Kai-Oliver
(86) International application number: PCT/CN2014/073748
(87) International publication number: WO 2014/154110

(57) **Abstract**

The present invention discloses an online payment system and method based on two-dimensional codes. The system comprises a payment server and a payment client, wherein the payment server being configured to generate a unique identifier of a commodity/order and a random number as a challenge code, and to generate a two-dimensional code based on the unique identifier of the commodity/order and the challenge code, the payment server further being configured to display the two-dimensional code on a display device, the payment client being configured to read the unique identifier of the commodity/order and the challenge code in the two-dimensional code from the display device, the payment client further being configured to send a payment account, the unique identifier of the commodity/order, and a reply code to the payment server, and the payment server further being configured to perform a payment operation on the basis of the payment account, the unique identifier of the commodity/order, and the reply code.

## Description

### TECHNICAL FIELD

The present invention relates to online payment technology, and more particularly to an online payment system and method based on two-dimensional codes.

### BACKGROUND

The current online payment technology generally requires the user first to log into the payment system, and then to acquire the message verification code from the payment system, after the user enters the message verification code, the user further needs to enter the payment password again to complete the payment process. Such payment process is complicated, and there exists unsafe factors in the message verification code, such as delay, easy to be stolen.

The current application of the two-dimensional code in the field of online payment generally relates to be used as the identifier of the order, for telling the backstage server to pay for which order (for example, the two-dimensional code swipe card of the box payment); or as the identifier of the commodity, for telling the backstage server of the goods that has been ordered (for example, two-dimensional code payment of Alipay), such application does not involve parts of user identity authentication and payment confirmation, that is, the two-dimensional code does not really enter the field of payment, but only has been used in parts of shopping and bordering.

### SUMMARY

According to an object of the present invention, an online payment system based on two-dimensional codes is provided, which comprises a payment server and a payment client, wherein
the payment server being configured to generate a unique identifier of a commodity/order and a random number as a challenge code, and to generate a two-dimensional code based on the unique identifier of the commodity/order and the challenge code,
the payment server further being configured to display the two-dimensional code on a display device,
the payment client being configured to read the unique identifier of the commodity/order and the challenge code in the two-dimensional code from the display device,
the payment client further being configured to send a payment account, the unique identifier of the commodity/order, and a reply code to the payment server, wherein the payment client generating the reply code based on the payment password and the challenge code according to a specific algorithm,
the payment server further being configured to perform a payment operation on the basis of the payment account, the unique identifier of the commodity/order, and the reply code.

Preferably, the payment client is a mobile communication device,
wherein the mobile communication device reads the unique identifier of the commodity/order and the challenge code in the two-dimensional code by shooting the two-dimensional code displayed on the display device.

Preferably, the mobile communication device is configured to bind the payment account with the mobile communication device, thereby sending the payment account to the payment server through binding information.

According to another object of the present invention, an online payment method based on two-dimensional codes comprising the following steps:
a payment server generating a unique identifier of a commodity/order and a random number as a challenge code, and generating a two-dimensional code based on the unique identifier of the commodity/order and the challenge code,
a payment server displaying the two-dimensional code on a display device,
the payment client reading the unique identifier of the commodity/order and the challenge code in the two-dimensional code from the display device,
the payment client sending a payment account, the unique identifier of the commodity/order, and a reply code to the payment server, wherein the payment client generating the reply code based on the payment password and the challenge code according to a specific algorithm, and the payment server performing a payment operation on the basis of the payment account, the unique identifier of the commodity/order, and the reply code.

Preferably, the payment client is a mobile communication device which reads the unique identifier of the commodity/order and the challenge code in the two-dimensional code by shooting the two-dimensional code displayed on the display device.

Preferably, the mobile communication device binds the payment account with the mobile communication device, thereby sending the payment account to the payment server through binding information.

One advantage of the present invention is that a manner of multi-factor (the mobile communication device and the password) authentication and a challenge/reply model are employed, which enhances the security of the online payment.

The online payment system according to the present invention cost less in deployment and is flexible to use.

The present invention avoids disadvantages of traditional authentication manner of the message verification code by really introducing the two-dimensional code into the payment process, making the payment process more simple and quick.

The present invention can introduce the online payment into the offline shopping, to realize an 020 mode.

### BRIEF DESCRIPTION OF THE DRAWINGS

After reading the specific implementation of the present invention with reference to the drawings, those skilled in the art will more clearly understand various aspects of the present invention. It should be understood by those skilled in the art that these drawings are only used for explaining the technical solution of the present invention in cooperation with the specific implementation, and are not intended to limit the scope of the present invention. In which,
Fig. 1 is a structural diagram of an online payment system according to embodiments of the present invention.
Fig. 2 is a procedure diagram of an online payment method according to embodiments of the present invention.

### DETAILED DESCRIPTION

The specific implementation of the present invention will be described in further detail with reference to the drawings hereinafter. In the following description, for the purpose of explanation, many specific details are stated in order to provide a thorough understanding of one or more aspects of embodiments. However, it may be obvious to those skilled in the art that one or more aspects of each embodiment may be practiced with less degree of such specific details. Thus the following description would not be considered as a limitation, but the scope thereof is defined by the attached claims.

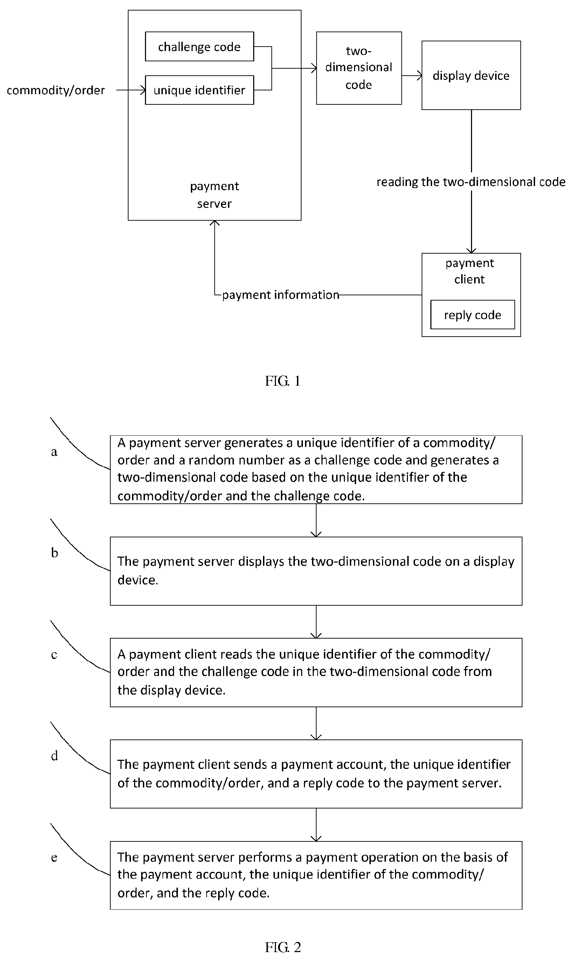

Fig. 1 is a structural diagram of an online payment system according to embodiments of the present invention.

As illustrated in the figure, the online payment system comprises a payment server and a payment client. The payment server is configured to generate a unique identifier of a commodity/order and a random number as a challenge code, and to generate a two-dimensional code based on the unique identifier of the commodity/order and the challenge code. Here, the unique identifier of the commodity may be corresponding to the commodity in the online shopping mall, and the unique identifier of the order may be corresponding to the purchase order of the user on the online shopping mall. The payment server may obtain information of the commodity/order from the online shopping mall.

The payment server is further configured to display the two-dimensional code on a display device. The display device herein may be a personal computer of the user in which case the user can select the commodity in the online shopping mall through the personal computer or generate an order (including one or more commodities) thereon, while the payment server generates a two-dimensional code from the commodity/order to be paid, for the mobile communication device carried by the user to read, such as mobile phones. The payment server can also display the two-dimensional code and commodity information associated with the two dimensional code on the display device, then the user can select the commodity to be purchased directly from the display device, in which case the display device may be the personal computer being used by the user, as well as any other display devices, such as tablet computers, indoor electronic advertising display board and so on.

The payment client is configured to read the unique identifier of the commodity/order and the challenge code in the two-dimensional code from the display device. The payment client may be a mobile communication device which reads the unique identifier of the commodity/order and the challenge code in the two-dimensional code by shooting the two-dimensional code displayed on the display device.

The payment client is further configured to send a payment account, the unique identifier of the commodity/order, and a reply code as payment information to the payment server, wherein the payment client generates the reply code based on the payment password and the challenge code according to a specific algorithm (for example, the Hash algorithm), thus enhancing the security of the payment password during transmission.

The payment server performs a payment operation on the basis of the payment account, the unique identifier of the commodity/order, and the reply code. Here, the payment server verifies the user's identity through the reply code. The results of the payment operation will be fed back to the online shopping mall selling commodities.

In one embodiment, the mobile communication device is configured to bind the payment account with the mobile communication device, thereby sending the associated payment account to the payment server through binding information. After binding, the user does not need to re-enter the payment account when using the two-dimensional code to pay, which simplifies the payment operation. The payment account may be a bank card account or a credit card.

For example, according to the present invention, for the usage scenario of online payment, the commercial tenants are online shopping malls, when users pay while shopping on the online shopping mall, the webpage skips to the online payment webpage of the payment server and then presents the two-dimensional code generated by the system on the webpage. When the user shoots the two-dimensional code using the mobile communication device and correctly enters the payment password, the mobile communication device client sends the payment information to the payment server, the payment server in turn performs a deduction operation, and feeds the result back to the online shopping mall, meanwhile the webpage on the user computer skips back to the online shopping mall. In this example, the display device may be a user computer.

For another example, according to the present invention, for the usage scenario of offline payment, the commercial tenants are physical stores (such as supermarkets). The user shops in the supermarket, after the cashier scans all the commodities, the user chooses to pay through the payment server according to the present invention. The cashier system of the supermarket then generates an order which is sent to the payment server, and the payment server generates a two-dimensional code for this payment which is fed back to the cashier system of the supermarket. The cashier system of the supermarket displays the two-dimensional code on the screen of the cash register, the user shoots the two-dimensional code by using his own mobile communication device and enters the payment password thereon, and then the mobile communication device sends the information including the payment account, the unique identifier of the commodity/order, and the reply code to the payment server, which in turn performs a deduction operation and feeds the result back to the cashier system of the supermarket. In this example, the display device may be the screen of the cash register.

Fig. 2 is a procedure diagram of an online payment method according to embodiments of the present invention.

As illustrated in the figure, at step a, a payment server generates a unique identifier of a commodity/order and a random number as a challenge code and generates a two-dimensional code based on the unique identifier of the commodity/order and the challenge code.

At step b, the payment server displays the two-dimensional code on a display device.

At step c, a payment client reads the unique identifier of the commodity/order and the challenge code in the two-dimensional code from the display device.

At step d, the payment client sends a payment account, the unique identifier of the commodity/order, and a reply code to the payment server, wherein the payment client generates the reply code based on the payment password and the challenge code according to a specific algorithm.

At step e, the payment server obtains a payment password according to the received reply code and performs a payment operation on the basis of the payment account, the unique identifier of the commodity/order, and the payment password.

Through the description on the above implementations, those skilled in the art can understand that various modifications and replacements may also be made to the specific implementations of the present invention without departing from the spirit and scope of the present invention. All these modifications and replacements fall within the scope defined by the claims of the present invention.

## Claims

1. An online payment system based on two-dimensional codes, **characterized in** comprising a payment server and a payment client, wherein
the payment server being configured to generate a unique identifier of a commodity/order and a random number as a challenge code, and to generate a two-dimensional code based on the unique identifier of the commodity/order and the challenge code,
the payment server further being configured to display the two-dimensional code on a display device,
the payment client being configured to read the unique identifier of the commodity/order and the challenge code in the two-dimensional code from the display device,
the payment client further being configured to send a payment account, the unique identifier of the commodity/order, and a reply code to the payment server, wherein the payment client generating the reply code based on the payment password and the challenge code according to a specific algorithm, and
the payment server further being configured to perform a payment operation on the basis of the payment account, the unique identifier of the commodity/order, and the reply code.

2. The online payment system of claim 1, **characterized in**,
the payment client is a mobile communication device,
wherein the mobile communication device reads the unique identifier of the commodity/order and the challenge code in the two-dimensional code by shooting the two-dimensional code displayed on the display device.

3. The online payment system of claim 2, **characterized in**,
the mobile communication device is configured to bind the payment account with the mobile communication device, thereby sending the payment account to the payment server through binding information.

4. An online payment method based on two-dimensional codes, **characterized in**,
a payment server generates a unique identifier of a commodity/order and a random number as a challenge code, and generates a two-dimensional code based on the unique identifier of the commodity/order and the challenge code,
a payment server displays the two-dimensional code on a display device,
the payment client reads the unique identifier of the commodity/order and the challenge code in the two-dimensional code from the display device,
the payment client sends a payment account, the unique identifier of the commodity/order, and a reply code to the payment server, wherein the payment client generating the reply code based on the payment password and the challenge code according to a specific algorithm, and
the payment server performs a payment operation on the basis of the payment account, the unique identifier of the commodity/order, and the reply code.

5. The online payment method of claim 4, **characterized in**,
the payment client is a mobile communication device,
wherein the mobile communication device reads the unique identifier of the commodity/order and the challenge code in the two-dimensional code by shooting the two-dimensional code displayed on the display device.

6. The online payment method of claim 5, **characterized in**,
the mobile communication device binds the payment account with the mobile communication device, thereby sending the payment account to the payment server through binding information.
